# EUROPEAN PATENT SPECIFICATION

(11) **EP 4 263 692 B1**
(45) Date of publication and mention of the grant of the patent: **25.03.2026**
(21) Application number: 22749311.1
(22) Date of filing: 24.01.2022
(51) Int. Cl.: C08K 3/36, B01J 20/30, B01D 15/20, B01J 20/283, B01J 20/287, B01J 20/34, B01J 20/32, B01D 15/32

(54) **A PROCESS FOR THE REGENERATION OF SILICA BASED REVERSE PHASE CHROMATOGRAPHY MATERIAL**
VERFAHREN ZUR REGENERIERUNG VON UMKEHRPHASENCHROMATOGRAPHIEMATERIAL AUF SILICABASIS
PROCÉDÉ POUR LA RÉGÉNÉRATION D'UN MATÉRIAU DE CHROMATOGRAPHIE EN PHASE INVERSE À BASE DE SILICE

(30) Priority: 02.02.2021 IN 202141004532
(43) Date of publication of application: 25.10.2023
(73) Proprietor: Biocon Biologics Limited, 560100 Bengaluru (IN)
(72) Inventor: ALAGURAJAN, Sathish, Karnataka, Bengaluru 560100 (IN); KAMATH, Sandeep V, Karnataka, Bengaluru 560102 (IN); QAIS, Shabandri, Karnataka, Bengaluru 560100 (IN)
(74) Representative: Michalski Hüttermann & Partner Patentanwälte mbB
(86) International application number: PCT/IB2022/050579
(87) International publication number: WO 2022/167891

(56) References cited:
- WO-A1-2016/139128
- WO-A2-01/27623
- US-B1- 6 248 683
- US-B1- 6 248 683
- US-B2- 9 364 772
- US-B2- 9 364 772
- MAJORS R. E.: "The Cleaning and Regeneration of Reversed Phase HPLC Columns", LCGC NORTH AMERICA, vol. 21, no. 1, 1 January 2003 (2003-01-01), pages 19 - 24, XP002293699

## Description

### FIELD OF THE DISCLOSURE

The present invention relates to a process for the regeneration of a reverse phase chromatography material.

### BACKGROUND

The following discussion of the background is merely provided to aid the reader in understanding the invention and is not admitted to describe or constitute prior art to the present invention.

Purification of a polypeptide from a mixture is a step which is used several times during the overall manufacturing process for a therapeutic polypeptide. The majority of biomolecules such as proteins and polypeptides are used for therapeutic purposes and need to undergo multiple purification steps to ensure utmost purity.

As an example, in preparative purification of peptides expressed from *Pichia pastoris*, reverse phase chromatography (RPC) is often employed. Due to the continuous use of the chromatographic resin, there is a build-up of left over proteins, mixed compounds and other impurities on the chromatographic resin. This build-up over time increases the pressure in the column and can affect retention time of the product and the column performance. Therefore the resin needs to be regenerated after a defined numbers of cycles to restore the resin for an optimal resolution of impurities. Due to the physio-chemical properties of the solutions, buffers and continual reuse of the resin, the life span of an RPC resin despite the regeneration process is minimal. The RPC loads comprise Pichia pigments and inorganic salts that are a carryover from preceding processing steps. All these foreign components other than the peptide of interest slowly accumulate on to the resin, leading to high pressure, noncompliance to set in-process quality limits and eventually to pre-expiry of the resin.

Previously, to mitigate high pressure and pre expiry of resin, regeneration was performed with higher organic solvent % in a gradient with sodium hydroxide and acetic acid. Although the concentration of sodium hydroxide used for regeneration removed highly hydrophobic protein, it was incapable of displacing the bound pigments. Increased concentration of sodium hydroxide was not capable of decolouring the pigments and it dissolved the silica-based reverse phase chromatographic resin.

Another method used for regeneration involves unpacking and repacking of a column between defined numbers of cycles in order to remove the pigmented resin and to replace it with fresh resin. As a consequence, resin is removed before its maximum usage. Further, frequent unpacking of the resin damaged silica particles and lead to defining of the resin that eventually chokes the column frits. Also, unpacking and repacking increased the operational time, and is not a feasible and recommended at commercial scale manufacturing.

However, resins are expensive and are difficult to replace. If base solvent/acid solvent regeneration and unpack / repack procedure do not clean the resin efficiently, then the resin needs to be changed. As a result, resin needs to be discarded before its maximum usage.

U.S. Pat. No. 9,364,772 discloses a process to regenerate a stationary chromatography phase made of silica material or substituted silica material, such as C8, by using a regeneration solution comprising formic acid as a solvent.

WO 2007/050221 discloses a method for using chlorine dioxide, e.g., pure chlorine dioxide solution, for cleaning, regenerating and/or sterilizing chromatographic media.

Chinese patent publication no. 105289555 relates to a method for regeneration of a resin by removing the silica resin from assembly, addition of 2% sodium hypochlorite (soaking for 2hrs) followed by sodium hydroxide solution.

Chinese patent publication no. 101612598 discloses a method to resuscitate the activity of a contaminated resin by sodium hypochlorite after the third step along with an iron ion complexing agent and a dispersing agent for 2-3 hrs.

US6248683 B1 describes a regeneration method of a silica gel resin by first contacting the resin with an organic solvent such as acetonitrile followed by treatment with an oxidizing agent such as H₂O₂/NaClO.

There is still a need for an efficient regeneration process which removes as many bounded particles as possible from the resin without affecting the resin life and a process which reduces or eliminates the number of unpack and repack steps.

### OBJECT OF THE INVENTION

Accordingly, it is an object of the present invention to overcome the disadvantages and drawbacks of the known processes.

It is another object of the present invention to provide for efficient regeneration that removes the impurities without affecting the resin life.

It is a further object of the present invention to reduce or eliminate the number of unpack and repack steps.

### SUMMARY OF THE DISCLOSURE

Provided is a process of regenerating a reverse-phase chromatography material. Provided is also the use of a regeneration solution for regenerating a reverse-phase chromatography material.

The present process and the use are generally for cleaning or regenerating a reverse phase chromatography material, e.g., a reverse phase chromatography resin, after carrying out chromatography, for subsequent use. The reverse phase chromatography material may be included in a chromatography column. The reverse phase chromatography material may be included in a column in packed form.

The disclosure relates to the regeneration of used reverse phase chromatography material. In some embodiments the process includes allowing a regeneration solution to pass through and/or over the chromatography material. In some embodiments the regeneration solution is allowed to pass through and/or over the chromatography material upward from bottom of the resin. In the process, applying the regeneration solution is followed by allowing water, e.g. purified water, to pass through the chromatography material. The invention is defined in the appended claims.

A process for regenerating chromatographic resin using a regeneration solution comprising steps:
1. Contacting the chromatography resin with regeneration solution comprising sodium hypochlorite and acetonitrile (ACN) until outlet pH reaches ≥11. The regeneration solution is passed upwards from a bottom part of the chromatographic resin
2. Neutralizing the chromatography resin with acetic acid and acetonitrile at acidic pH ≤ 5.
3. Washing the chromatography resin with purified water and acetonitrile.

During the first step of Regeneration, the sodium hypochlorite in solution is provided at an alkaline pH. Denaturation of protein, generally, occurs at alkaline pH, due to which conformation of protein changes and gets removed from the resin.

In the second step of Neutralization, the ligands attached to the stationary phase, e.g. the resin, are often vulnerable to alkaline pH, thus it is important to neutralize using acid at pH ≤ 5.

During the third step of washing, traces of regeneration and neutralization buffer components used in the previous steps are removed with water and/or a solvent such as acetonitrile, until the outlet conductivity matches with the inlet conductivity.

### BRIEF DESCRIPTION OF DRAWINGS

**FIG. 1** refers to procedure for Sodium hypochlorite regeneration
**FIG. 2** depicts the resin tested with different reagents and solvents where it can be observed that use of only Sodium hypochlorite (4^{th} bottle from left) resulted in the removal of colour from the resin.
**FIG. 3** depicts the standard curve obtained of the absorbance vs concentration of sodium hypochlorite during Rhodamine B analysis.
**FIG. 4A** refers to column test performed after Sodium hydroxide regeneration
**FIG. 4B** refers to column test performed after Sodium hypochlorite regeneration
**FIG. 5A and 5B** refers to RP-1 Cycle before Sodium hypochlorite regeneration and RP-1 Cycle after Sodium hypochlorite regeneration, respectively.
**FIG. 6** illustrates the physical appearance of the resins at various stages (fouled, regenerated and fresh) and colour of the resins observed.
**FIG. 7A-7E** depicts the particle size of the silica gel resins analyzed by Sedimentation method.
**FIG. 8** is chromatogram of Pyridine-Phenol test conducted for detecting Silanol activity, showing similarity in peak for fresh resin and regenerated resin.

### DETAILED DESCRIPTION

Provided is a process for cleaning a reverse phase chromatography material for reuse. The embodiments of the following description which are not covered by the appended claims are considered as not being part of the present invention.

Disclosed is a process for regeneration of chromatographic material, e.g. a resin that has been used in preparative phases of purification of a therapeutic polypeptide such as recombinant human insulin, insulin analogues and derivatives.

In some embodiments the process for regenerating a chromatographic resin of reverse phase-high pressure liquid chromatography (RP-HPLC), involves a step wherein said chromatographic resin is contacted with a regeneration solution, followed by neutralization and washing. The regeneration solution passed through the resin from a bottom of the resin upward through the column without unpacking resin from the column.

The process is a process for regenerating a chromatographic resin for at least 30 minutes by contacting with regeneration solution, wherein, the said regeneration solution comprises bleaching agent sodium hypochlorite and organic solvent acetonitrile (ACN). The alkaline pH ≥ 11 of sodium hypochlorite changes the conformation of protein and gets removed from the resin

Regeneration is in some embodiments followed by neutralization solution at acidic pH ≤ 5. The neutralization solution contains an organic acid such as acetic acid. The neutralization solution also contains an organic solvent such as acetonitrile.

During the third and last step of washing, the traces of regeneration and neutralization buffer components used in the previous steps are cleaned. This may for example be done with water and acetonitrile. In some embodiments washing is carried out until the outlet conductivity matches with the inlet conductivity. Another aspect of the present disclosure is the use of a process disclosed herein for regenerating a chromatographic resin. Thereby the pressure drop occurring over the length of the chromatographic column, when in use, is reduced.

Provided is also the use of a regeneration solution that contains sodium hypochlorite and acetonitrile for regenerating a reverse-phase chromatography material.

The bleaching agent is an oxidizing agent in particular a sodium hypochlorite. Other examples of bleaching agents, not according with the invention, are hypochlorite, chlorite, chlorate or a perchlorate such as calcium hypochlorite, potassium hypochlorite, hydrogen peroxide, chlorine dioxide and mixtures thereof.

In order that the explanations on the processes and uses disclosed herein may be more readily understood, certain terms are first defined.

### Definitions

Unless otherwise defined, all other scientific and technical terms used in the description, figures and claims have their ordinary meaning as commonly understood by one of ordinary skill in the art.

The word "about" as used herein refers to a value being within an acceptable error range for the particular value as determined by one of ordinary skill in the art, which will depend in part on how the value is measured or determined, i.e., the limitations of the measurement system. For example, "about" can mean within one, or more than one standard deviation, per the practice in the art. The term "about" is also used to indicate that the amount or value in question may be the value designated or some other value that is approximately the same. The phrase is intended to convey that similar values promote equivalent results or effects as disclosed herein. In this context "about" may refer to a range above and/or below of up to 10%. The word "about" refers in some embodiments to a range above and below a certain value that is up to 5%, such as up to up to 2%, up to 1%, or up to 0.5 % above or below that value. In one embodiment "about" refers to a range up to 0.1 % above and below a given value.

The terms "chromatography material" and "chromatographic material" as used herein mean the stationary solid phase over which the soluble phase passes, i.e. the chromatographic matrix. The chromatographic material is typically arranged within a chromatographic column. The chromatographic material may be packed into a column. The material may be a resin. Porous or nonporous silica particles with coupled hydrophobic moieties such as alkyl chains are often used in the art in reversed-phase chromatography. The resin may be made of substituted silica, such as C-4 silica, C-8 silica, C-12 silica and C-18 silica. The structure of silica is built up of a three-dimensional combination of the siloxane link Si--O--Si and the silanol link Si--OH. Further examples of a chromatographic material are a membrane, a monolithic material and a filter. In some embodiments the chromatographic material may be defined by a monolithic column. A monolithic column may include a plurality of channels arranged inside the column. Reversed-phase polymeric monoliths are commercially available from BIA Separations (Agilent technologies) or Merck KGaA. Often a resin such as a resin consisting of beads is used. A chromatography material used in reverse-phase chromatography is a hydrophobic material.

The term "regeneration solution" refers a solution which is used to regenerate a chromatographic resin. The purpose of the regeneration is to keep a satisfactory performance of the chromatographic separation over several chromatographic cycles. A regeneration step may comprise contacting of the chromatographic resin with either a single regeneration solution or with more than one regeneration solution.

The term "organic solvent" as used herein means a solvent which comprises at least one carbon-atom and which can be maintained in the fluid state for carrying out the process disclosed herein. Typically, the organic solvent used is a solvent that is in the liquid state under atmospheric pressure conditions throughout the temperature range from 0° C to 50° C. Non-limiting examples of organic solvents are lower alcohols such as methanol and ethanol, polyhydric alcohols, acetonitrile, hexane and acetone, ethanol, 1-propanol, 2-propanol, and hexyleneglycol.

The term "bleaching agent" refers to a material that lightens or whitens a substrate through chemical reaction. The bleaching reactions usually involve oxidative or reductive processes that degrade colour systems. Non-limiting examples of bleaching agent include sodium hypochlorite, hydrogen peroxide (H₂O₂).

The term "pharmaceutical composition" as used herein means a product comprising an active compound or a salt thereof together with pharmaceutical excipients such as buffer, preservative and tonicity modifier, said pharmaceutical composition being useful for treating a disease or disorder. Thus a pharmaceutical composition is also known in the art as a pharmaceutical formulation.

The term "therapeutic polypeptide" as used herein means a polypeptide for which there is a recognized potential utility as a therapeutic agent. Examples of therapeutic polypeptides are human insulin, analogues and derivatives, thrombopoetin, erythropoietin and human growth hormone etc.

The term 'RPC' refers to reverse-phase chromatography that uses a hydrophobic chromatographic resin. The term mainly refers to liquid (rather than gas) chromatography. Reversed-phase liquid chromatography separates molecules based on surface hydrophobicity. Since the resin is hydrophobic, molecules with hydrophobic properties contained within the mobile phase will have a high affinity for the resin and get adsorbed to the column packing. Elution of the hydrophobic molecules adsorbed to the column packing requires the use of more hydrophobic or more non-polar solvents in the mobile phase to shift the distribution of the particles in the resin towards that of the mobile phase.

The term "RP-HPLC" refers to reverse phase high pressure liquid chromatography which is a technique in analytical chemistry used for manufacturing, research and medical purposes to separate, identify and quantify each component in a mixture. It relies on pumps to pass a pressurized liquid solvent containing the sample mixture through a column filled with a solid adsorbent material. Each component in the sample interacts slightly differently with the adsorbent material, causing different retention time for the different components and leading to the separation of the components as they flow out of the column.

The term "Column Volume" or "CV" refers to amount of mobile phase that can be contained in the chromatography column.

The term "*Pichia pastoris"* refers to a species of methylotrophic yeast which is frequently used as an expression system for the production of therapeutic polypeptides.

The term "human insulin" as used herein means the human hormone whose structure and properties are well known, and includes naturally occurring isoforms and variants. The protein is generated by processing of preproinsulin, which can be found under Uniprot database entry P01308 (version 256 of 12 August 2020, version 1 of the sequence of 21 July 1986), of which isoform 1, the canonical sequence, has 110 amino acids. Known variants, which are often associated with a disease, include the variants having a mutation a mutation H → D at position 29, a mutation G → R at position 32, a mutation G → S at position 32, a mutation H → D at position 34, a mutation C → G at position 43, a mutation G → V at position 47, or a mutation S → C at position 101, to name a few. Further variants can be taken from the above Uniprot entry. Human insulin has two polypeptide chains that are connected by disulphide bridges between cysteine residues, namely the A-chain and the B-chain. The A-chain is a 21 amino acid peptide, corresponding to amino acid positions 90 - 110 of preproinsulin, and the B-chain is a 30 amino acid peptide, corresponding to amino acid positions 25 - 54 of preproinsulin. The two chains are connected by three disulphide bridges: one between the cysteine in position 6 and 11 of the A-chain (positions 95 and 100 of preproinsulin), the second between the cysteine in position 7 of the A-chain and the cysteine in position 7 of the B-chain (positions 31 and 96 of preproinsulin), and the third between the cysteine in position 20 of the A-chain and the cysteine in position 19 of the B-chain (positions 43 and 109 of preproinsulin).

The term "analogue" as used herein in relation to a parent polypeptide means a modified polypeptide wherein one or more amino acid residues of the parent polypeptide have been substituted/deleted/added by other amino acid residues. Such addition or deletion or substitution of amino acid residues can take place at the N-terminal of the polypeptide or at the C-terminal of the polypeptide or within the polypeptide. An insulin analogue is able to induce the same effects and have the same function in the human body in terms of controlling blood glucose levels as the naturally occurring canonical form of insulin. Two examples of an insulin analogue are insulin Aspart and insulin Lispro. Two further examples of an insulin analogue are insulin Glargine and insulin Glulisine. Yet two further examples of an insulin analogue are Detemir insulin and Degludec insulin. Yet another example of an insulin analogue is insulin tregopil. Other examples are porcine or bovine insulin which can both be taken to be analogues of human insulin.

The term "Aspart" refers to rapid-acting insulin analogue which differs from human insulin by a single substitution of proline with aspartic acid in position 28 on the C-terminal end of the B-chain.

The term "Glargine" refers to long-acting insulin analogue which differs from human insulin wherein the amino acid asparagine at position 21 on the Insulin A-chain is replaced by glycine and two arginine residues are added to the C-terminus of the B chain.

The term 'Lispro' refers to rapid-acting insulin analogue which differs from human insulin wherein lysine and proline residues at position 28 and 29 on the C-terminal end of the B-chain are reversed.

The term "unbound, entrained and/or non-specifically adsorbed material" refers to any unwanted material from a production batch of a wanted target (bio)molecule, such as mammalian cells, bacteria, fragments of cellular organisms, proteins, nucleic acids, lipids, etc. derived from cellular organisms, which can either degrade the immobilised adsorption ligands, block the ligands from interacting with the solution or physically block pores in the adsorbent so that target molecules cannot reach the immobilised adsorption ligands or pose a risk of cross-contamination between successive batches of produced target biomolecule reusing the same batch of adsorbent.

The scope and meaning of any use of a term will be apparent from the specific context in which the term is used. Certain further definitions for selected terms used throughout this document are given in the appropriate context of explanations, as applicable.

Various aspects of the disclosure are described in further detail in the following text passages. It is understood that the various embodiments, preferences and ranges may be combined at will. Further, depending of the specific embodiment, selected definitions, embodiments or ranges may not apply.

A typical chromatography process consists of 5 steps, as follows:
**1. Equilibration:** performed to prepare the column for loading.
**2. Loading or sample application:** Loading or sample application is the step where the protein mixture is loaded onto the column for binding.
**3. Washing:** performed to remove the unbound or weakly bound proteins from the column.
**4. Elution:** performed to elute the target protein from the column.
**5. Regeneration:** performed to remove the strongly bounded protein.

An additional regeneration of the column is performed to remove the strongly bounded molecules, pigments and buffer components, which cannot be removed by chromatography regeneration step.

The process disclosed herein relates to this additional regeneration of the column which is carried out after the chromatography regeneration step.

The polypeptide purification process is typically an elution chromatography process. The regeneration process can in this case also be taken to be an elution chromatography process, with the difference that in regeneration left-over matter that is undesired is to be eluted from the chromatography material.

The compound of interest may be a polypeptide such as a therapeutic polypeptide product. A therapeutic polypeptide product is generally manufactured by a process comprising the steps of:
I. purifying a polypeptide or a precursor thereof using the chromatographic resin, and
II. isolating said polypeptide or a precursor thereof to give the resulting polypeptide product.

A process as disclosed herein includes contacting a chromatography material that is to be cleaned with a regeneration solution. The chromatography material is the stationary phase used in the chromatography process. The chromatography material may define a bed along or through which the mobile phase can be allowed to flow. The chromatography material may be a resin.

According to the present disclosure, the chromatographic material may be any reversed phase material such as an RP-HPLC matrix. In some embodiments, a chromatographic resin used is a HPLC resin. A resin for RP-HPLC may be silica such as C4- or C6-silica. In some embodiments the chromatographic material may be C8- or C10-silica. The chromatographic material may in some embodiments be C12- or C16-silica. The chromatographic material may also be C18- or C30-silica. In some embodiments the chromatographic material may be cyclohexyl-silica or phenyl silica. The chromatographic material may in some embodiments be phenyl propyl silica or phenyl-butyl silica. In some embodiments the chromatographic material may be phenyl-hexyl silica or a pentafluorophenyl silica. In some embodiments the chromatographic material may be a cholesteryl silica or a cyano silica. Suitable silica material for use as chromatographic resin are for example spherical particles with a narrow pore size and particle sizes in the range from 3 µm to 100 µm. In some embodiments the pore size is in the range of 60 Å to 300 Å, such as 100 Å or 120 Å. The pore size may also be 150 Å or 175 Å. In some embodiments the pore size may be 200 Å or 300 Å. The chromatographic column can be packed with the resin.

Any desired column volume may be used in the process disclosed herein. Typically, the column diameter is in the range of 3 to 1200mm. In some embodiments the column has a diameter of 4.6mm or 10mm. In some embodiments the column has a diameter of 21.2mm or 50mm. In some embodiments the column has a diameter of 400mm or 600mm. In some embodiments the column has a diameter of 800mm.

The regeneration solution, with which the chromatography material is contacted, contains sodium hypochlorite and acetonitrile at pH of 11 or more The process typically includes allowing the chromatography material to contact the regeneration solution for a certain period of time. During this period of time the regeneration solution may be in a state of flow or in a static state.

Examples of suitable bleaching agents that may be included in the process disclosed herein have already been disclosed above. As for a solvent present in the mobile phase, in reversed-phase chromatography the mobile phase is substantially more polar than the stationary phase. Therefore, for the purification of a polypeptide, a polar solvent is included in the mobile phase. For the regeneration procedure, a less polar mobile phase may be used in order to be able to elute matter that has bound to the stationary phase and that cannot, or not completely, be removed under the conditions used for purification purposes. An organic solvent of low or medium polarity, or even a non-polar solvent may thus be used, as long as its use does not lead to a detrimental effect on the stationary phase.

Not according to the invention:
The organic solvent included in the regeneration solution may in some embodiments be 2-methoxyethanol or *N*,*N-*dimethylformamide. In some embodiments the organic solvent may be dimethyl acetamide or *N-*methylpyrrolidone. In some embodiments the organic solvent may be dimethyl sulfoxide or acetonitrile. In some embodiments the organic solvent may be 3-pentanol or 2-pentanol. In some embodiments the organic solvent may be i-butanol or aniline.

The organic solvent may have a dielectric constant in the range from 40 to 5. As two examples, acetic acid has a dielectric constant of 6, and isopropyl alcohol has a dielectric constant of 18. As two further examples, dichloromethane has a dielectric constant of 9.1. As yet two further examples, tetrahydrofuran has a dielectric constant of 7.5 and hexamethylphosphoric triamide has a dielectric constant of 30. Yet two further examples are benzonitrile with a dielectric constant of 25.9 and methyl ethyl ketone with a dielectric constant of 18.5. The organic solvent may also have a dielectric constant in the range from 5 to 1.5. As two examples, hexane has a dielectric constant of 1.9, and 1,4-dioxane has a dielectric constant of 2.3.

In some embodiments the chromatography material is contacted with the regeneration solution while the chromatography material is arranged within a chromatography column. In some embodiments the chromatography material is contacted with the regeneration solution without unpacking the resin from a column. Where desired, the process may also be carried out in a different column than used for a preceding purification process or outside a chromatography column. In some embodiments the chromatography material is contacted with the regeneration solution after unpacking the resin from a column.

The regeneration solution, with which the chromatography material is contacted, is in some embodiments alkaline The regeneration solution has a pH of 11 or more. In some embodiments the regeneration solution has a pH of 12 or more.

The chromatography material may be allowed to contact the regeneration solution for any desired period of time. As an illustrative example, a contact time with the regeneration solution may be selected to be in the range from 1 minute to 8 hours or more, such as up to 300 minutes. In some embodiments a contact time from 5 minutes to 120 minutes, or from 10 minutes to 60 minutes may be chosen. As two illustrative examples, the chromatography material may be allowed to contact the regeneration solution for 30 minutes or for 45 minutes.

Contacting the chromatography material with a regeneration solution may be carried out by allowing a volume of a half or of one or more material volumes of the column to pass over and/or through the chromatography material. In some embodiments two or more or three or more material volumes are allowed to pass over and/or through the chromatography material.

The process disclosed herein also includes contacting the chromatography material with a neutralization solution. Thereby the chromatography material is neutralized. Contacting the chromatography material with a neutralization solution is done after allowing the chromatography material to contact the regeneration solution. Therefore, the chromatography material is at this stage in a regenerated state. The neutralization solution contains an organic acid and an organic solvent.

Any organic acid may be used in the neutralization solution, as long as no detrimental reaction with the bleaching agent is allowed to occur and as long as care is taken no undesired acidification is allowed to proceed. Depending on the subsequent process or storage that may be intended, an acidification may not be desired. In some embodiments the organic acid is a carboxylic acid. In some embodiments the organic acid is a carboxylic acid of two or more carbon atoms. In some embodiments the organic acid has a pKa value in the range from 1.5 to 5.0, such as in the range from 2.5 to 5.0. In some embodiments the organic acid is acetic acid, having a pKa of 4.76, or butanoic acid, having a pKa of 4.82. In some embodiments the organic acid is 2-hydroxy-benzoic acid, having a pKa of 2.97, or hydroxyethanoic acid, having a pKa of 3.88. In some embodiments the organic acid is 4-hydroxy-benzoic acid, having a pKa of 4.58, or lactic acid, having a pKa of 3.86. In some embodiments the organic acid is oxalic acid, having a second pKa value of 4.14.

In some embodiments the organic acid is different from formic acid. In some embodiments the organic acid is formic acid.

The regenerated chromatographic resin is contacted with a neutralization solution that includes an organic acid and an organic solvent. The organic solvent included in the neutralization solution may be an organic solvent described above for the regeneration solution. The organic solvent included in the regeneration solution and the organic solvent included in the neutralization solution may be selected independent from each other.

As already indicated above, if the chromatography material is arranged within a column, the column need not be unpacked to perform this step. The neutralization can be performed inside the chromatography column.

In one embodiment, the organic acid is acetic acid, such as 0.5 to 17.5 M acetic acid. In some embodiments, the organic solvent is acetonitrile, such as 100% pure acetonitrile. Ligands attached to the stationary phase are often vulnerable to alkaline pH, in which case it is desirable to neutralize using acid at pH ≤ 5.

In the process of regeneration of chromatographic resin, the second step of neutralizing the chromatography resin with acetic acid and acetonitrile at acidic pH ≤ 5 was run for 4 column volumes.

According to the present disclosure, any purification process may precede the regeneration process. As an example, the purification process may have involved or concerned a therapeutic polypeptide. The therapeutic polypeptide may for instance be selected from the group consisting of human insulin, a human insulin precursor, a human insulin analogue, a human insulin analogue precursor, and derivatives thereof. In yet another embodiment the polypeptide may be selected from the group consisting of recombinant human insulin, insulin Glargine, insulin Aspart, insulin Lispro, and insulin Tregopil etc.

In an illustrative process for regenerating a chromatographic resin according to the present disclosure, in a first step, the chromatographic resin is contacted with a regeneration solution that contains sodium hypochlorite solution and acetonitrile at pH of 11 or more.

Denaturation of protein occurs at alkaline pH and gets removed from the resin. In a one embodiment, the bleaching agent or oxidizing agent is sodium hypochlorite, for example in the range of 0.4-4.0%. In some embodiments, the organic solvent is acetonitrile.

A typical example of a bleaching agent that may be included in the regeneration solution is sodium hypochlorite. It is illustrated to remove colour from the resin employed. The mechanism of colour removal in the example below is due to the oxidation of either Mg²⁺ or Fe²⁺ from the phytochromobilin, which is a pigment produced by the *Picha pastoris* and higher pH of the sodium hypochlorite removed all the bounded particle from the resin.

In the process for regeneration of a chromatographic resin as disclosed herein, the chromatographic resin may be contacted with the regeneration solution inside the chromatographic column. In this way a minimum of production capacity is lost due to down-time in connection with the regeneration step. Thus, the process of regenerating the chromatographic resin can be performed without repacking the column.

In the disclosed process for regenerating a chromatographic resin the chromatographic material may be contacted with the regeneration solution until the pH of the chromatography resin reaches a value of 11 or more. Denaturation of protein, generally, occurs at alkaline pH and gets removed from the resin. In some embodiments a flow of regeneration solution over and/or through the chromatography material is allowed, until the pH of liquid that leaves the chromatography material reaches a value of 11 or more. In some embodiments a flow of regeneration solution over and/or through the chromatography material is allowed to occur for 2 or more column material volumes.

In an embodiment of the process of regeneration of chromatographic resin, contacting the chromatography resin with a regeneration solution sodium hypochlorite and acetonitrile until the fluid leaving the column reaches a pH of ≥11 is run for at least 2 or more additional column volumes. In some embodiments contacting the chromatography material with a regeneration solution is carried out by allowing one or more column volumes to pass over and/or through the chromatography material. In some embodiments contacting the chromatography material with a regeneration solution is carried out by allowing 3 or more column volumes, such as 4 or more column volumes to pass over and/or through the chromatography material. The column need not be unpacked to perform this step. The process can be performed inside the chromatography column.

Contacting the chromatographic material with the regeneration solution may in some embodiments be performed in a temperature range from 5 to 40 °C. In some embodiments contacting the chromatography material with the regeneration solution may be carried out in the range from about 20° C to 30° C. In one embodiment the chromatography material is contacted with the regeneration solution at room temperature, e.g. 25 °C.

The process disclosed herein also includes washing the chromatography material with a water containing solution. At this stage the chromatography material is regenerated and neutralized. The chromatographic material is typically contacted with a wash solution that contains purified water and an organic solvent. Any organic solvent may be used in the wash solution, as long as the organic solvent is compatible with the chromatography material. It may in some cases be desirable to choose an organic solvent that corresponds to an organic solvent that is intended to be used after the process of regenerating the chromatography material. It may in some cases also be desirable to choose an organic solvent that has been found to be suitable for storage under desired conditions.

In some embodiments the organic solvent included in the wash solution is an organic solvent as described above for the regeneration solution. In some embodiments the organic solvent included in the wash solution is an organic solvent as described above for the neutralization solution. The organic solvents included in the regeneration solution, in the neutralization solution and in the wash solution are selected independent from each other. In some embodiments the organic solvent included in the wash solution is acetonitrile, such as 100% pure acetonitrile.

The water included in the wash solution may in some embodiments be purified water.

Traces of regeneration and neutralization buffer components used in the previous steps will be cleared with the passing of water and the organic solvent through the column. Washing may be allowed to occur until the conductivity of the wash solution before and after contacting the chromatography material remains unchanged. A column containing the chromatography material may for instance be washed until the outlet conductivity matches with the inlet conductivity. The column need not be unpacked to perform this step. The washing can be performed inside the chromatography column. In some embodiments washing the neutralized chromatography material is carried out inside a chromatography column. In some embodiments washing the neutralized chromatography material may be carried out outside a chromatography column.

In some embodiments contacting the chromatography material with a wash solution is carried out by allowing one or more column volumes to pass over and/or through the chromatography material. In some embodiments contacting the chromatography material with a regeneration solution is carried out by allowing two or more column volumes, such as three or more column volumes to pass over and/or through the chromatography material.

In an exemplary embodiment, the process of regeneration of a chromatographic resin, the third step of washing the chromatography resin with purified water and acetonitrile is carried out for 3 column volumes or for 5 column volumes.

In some embodiments, the process for regenerating a chromatographic material as disclosed herein is applied to the chromatographic material after every 5 to 40 cycles of use in purification. Generally, the process for regenerating is carried out for at least once every 50 chromatographic purification cycles, or at least once every 100 chromatographic purification cycles.

In a chromatographic separation process, critical performance related parameters are typically the pressure and the number of theoretical plates over the chromatographic column. Pressure and theoretical plates during column integrity test were evaluated by the present inventors to observe the effect of regeneration according to the process disclosed herein. High pressure during column testing and a lower number of theoretical plates indicate that the resin is fouled, and that its condition may impact the resolution in the preparative (purification) cycles. Where a porous resin is used, the pressure on a column tends to increase due to strong binding of protein/pigments in resin pores, clogging of pores due to strong binding of buffer components to resin etc. Generally, pressure of more than 2.0 MPa and a number of plates less than 15000 N during column integrity testing is considered as high pressure on a column. As a result, the column's efficiency to resolve is reduced. In such a condition the column is considered not suitable for use. When the pressure on resin lowers (less than 1.5MPa) and the number of plates increases, this is one of the indicator of removal of bound undesired impurities and of better resolution.

The following are examples, illustrating the process and use disclosed herein. It is understood that various other embodiments may be practiced, given the general description provided above.

**Examples** Embodiments falling under the claimed invention are those disclosing a regeneration solution comprising acetonitrile and sodium hypochlorite at pH of 11 or more.

The disclosed regeneration process will further be illustrated below with reference to the following examples which are in no way intended to limit the scope of the invention.

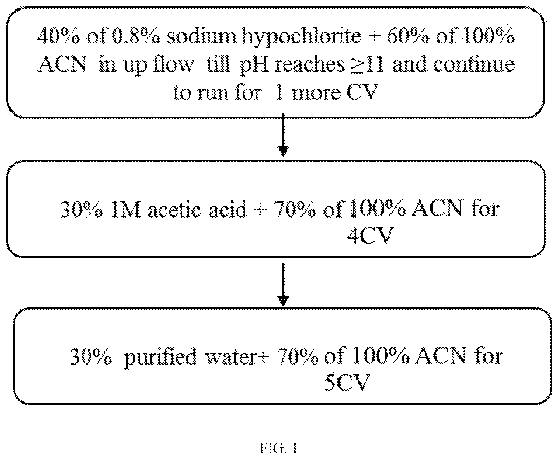

The regeneration was conducted step-wise as described in FIG. 1.

The effect of different chemicals (reagents and/or solvents) was studied on resin for regeneration. The following 7 chemicals were tested for developing the said regeneration process of present invention for chromatography resin. The resin was tested with these different reagents and solvents, where it was observed that use of only Sodium hypochlorite resulted in the removal of colour from the resin. Table 1 elaborated the list of chemicals used for testing regeneration of the column.

**Table 1: list of chemicals tested and their mixture tested for regeneration of column**

| **Sr. No.** | **Chemical (reagents and/or solvents) tested** | **Mixture used for 1gm resin** |
|---|---|---|
| | | |
| 1 | 1M Hydrochloric acid (HCl) | 80% 1MHCL + 20% pure ACN |
| 2 | 4M Guanidine hydrochloride (GuHCl) | 80% 1MHCL + 20% pure ACN |
| 3 | 100% Iso-propyl alcohol (IPA) ((CH3)2CHOH)) | Pure IPA |
| 4 | 0.8% Sodium hypochlorite (NaOCl) | 80% 1MHCL + 20% pure ACN |
| 5 | 100% Toluene (C7H8) | Pure Toulene |
| 6 | 70% ACN (Acetonitrile) in water | 70% pure ACN + 30% purified H₂O |
| 7 | 25mM Sodium hydroxide (NaOH) | 80% 1MHCL + 20% pure ACN |

The chemicals tested for developing the said invention were mixed in the ratio of 80% of the chemicals and 20% of pure Acetonitrile in 1 gm of resin, except for IPA and Toluene, where 100% of chemical was added to 1 gm of resin. Quantity of chemical (80%) will remain same irrespective of size of resin.

### Example 1

The chemical was passed to the 10mm*250mm length column in upward direction in ratio of 80% chemical and 20% pure acetonitrile, except for formic acid where 100% formic acid passed to the column. Table 2 elaborate the details of regeneration process.

**Table 2: Elaborates the comparative experimental data for all 6 chemicals tested for regeneration. (Abbreviations: UOM: unit of measurement)**

| **Sr. No.** | **Regene ration buffer** | **Pressu re before treat ment** | **Rete ntion Time befo re treat ment** | **Pea k-Ma x bef ore tre at** | **Asy mm etr y bef ore tre atm ent** | **Numb er of plates before treat ment** | **Pres sure after treat ment** | **Rete ntio n Tim e after treat ment** | **Peak - Max Afte r treat** | **Asy mme try after treat ment** | **Numb er of plates after treat ment** | **Turnaround time** |
|---|---|---|---|---|---|---|---|---|---|---|---|---|
| UOM | NA | MPa | mL | mAU | NA | N/M | MPa | mL | mAU | NA | N/M | Mins |
| 1 | 25mM NaOH | 3.28 | 92.0 2 | 304 .41 | 0.7 5 | 25729 .1 | 3.66 | 90.7 3 | 302. 08 | 0.99 | 24834. 4 | 90 |
| 2 | 50mM NaOH | 3.78 | 91.0 7 | 348 .34 | 0.8 8 | 34446 .1 | 3.30 | 90.8 2 | 332. 05 | 0.92 | 31059. 6 | 90 |
| 3 | 1M acetic acid | 3.30 | 90.8 2 | 332 .05 | 0.9 2 | 31059 .6 | 3.62 | 92.3 7 | 339. 24 | 0.98 | 34029. 5 | 45 |
| 4 | 4M GuHCl | 3.62 | 92.3 7 | 339 .24 | 0.9 8 | 34029 .5 | 3.13 | 92.1 2 | 345 | 0.95 | 36477. 4 | 30 |
| 5 | 0.8% hypoch lorite | 3.13 | 92.1 2 | 345 | 0.9 5 | 36477 .4 | 1.70 | 90.6 8 | 423. 2 | 1.04 | 52554. 9 | 60 |
| **6** | 100% Formic Acid | 2.40 | 91.4 9 | 577 .43 | 1.4 3 | 33156 | 1.47 | 89.7 4 | 208. 25 | 3.45 | 13731. 1 | 180 |

Sodium hydroxide, Acetic Acid (CH₃COOH), Guanidine hydrochloride (GuHCl), Hydrochloric acid (HCl), Formic Acid (CH₂O₂) and Sodium hypochlorite (NaOCl) were tested for regeneration of chromatography resin. The chromatography resin was a prepacked kromasil C8 silica column, which was failing for pressure during column test (More than 2.0MPa). High pressure during column test and lower number of plates indicates that the resin was fouled and it might have impacted the resolution on the preparative cycles.

Post regeneration experiments (as referred in table 2); it was observed that
1. Regeneration with formic acid reduced the column pressure but led to the loss of column integrity which can be inferred from asymmetry, retention time, peak max and number of plates.
2. The pressure reduction with formic acid was around 38% whereas with sodium hypochlorite it was 45% but without leading to the loss of column integrity with sodium hypochlorite.
3. Turnaround time for formic acid regeneration was around 180 minutes whereas for sodium hypochlorite was 60 minutes.

### Example 2:

The chemicals at alkaline pH greater than 11 denatures strongly bound proteins, nucleic acid, lipids, bacteria, and metal ions but is not observed to remove the pigment from resin.

The chemicals used were various reagents/solvents such as 1M Hydrochloric acid (HCl), 4M Guanidine hydrochloride (GuHCl), 100% Iso-propyl alcohol (IPA) ((CH3)2CHOH)), 0.8% Sodium hypochlorite (NaOCl), 100% Toluene (C7H8), 70% ACN (Acetonitrile) in purified water, 25mM Sodium hydroxide (NaOH) and 100% Formic Acid (CH₂O₂).

These chemicals were tested for developing the said invention were mixed in the ratio of 80% of chemicals and 20% of Acetonitrile in 1 g of resin, expect for IPA and toluene, where 100% of solvent added to 1 g of resin. The effect of these different reagents/solvents were tested on resin, based on its efficiency to remove colour from the resin.

**Table 3: Colour of supernatant post-regeneration using different chemicals**

| **Sr. No.** | **Reagents/solvents** | **UV absorbance (O.D) at 656nm** | **Colour of the supernatant** |
|---|---|---|---|
| 1 | 1M Hydrochloric acid (HCl) | 0.0 | No colour |
| 2 | 4M Guanidine hydrochloride (GuHCl) | 0.0 | No colour |
| 3 | 100% Iso-propyl alcohol (IPA) ((CH₃)₂CHOH)) | 0.0 | No colour |
| 4 | 0.8% Sodium hypochlorite (NaOCl) | 0.050 | Light brown colour |
| 5 | 100% Toluene (C₇H₈) | 0.0 | No colour |
| 6 | 70% ACN in water | 0.0 | No colour |
| 7 | 25mM Sodium hydroxide (NaOH) | 0.0 | No colour |

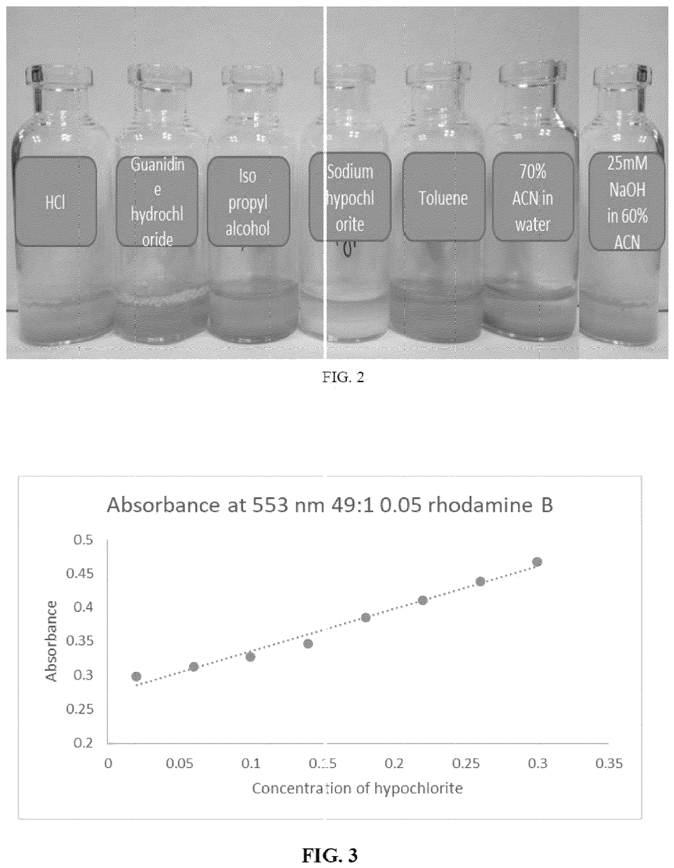

Table 3 elaborate the colour of supernatant. It was observed that only sodium hypochlorite (4^{th} bottle from left in FIG. 2) resulted in the removal of colour from the resin. Sodium hypochlorite on dissociation releases the hypochlorite (OCl⁻) ion, which is a strong oxidizing agent that oxidise the metal ion present in the pigment, thus removing all the pigmentation present in the column. Sodium hypochlorite in combination with higher pH ensures that all other contaminants are removed from the resin.

### Example 3

Residual sodium hypochlorite present in the wash sample was quantified with spectrophotometric method using Rhodamine B. This method has been applied for the determination of sodium hypochlorite in its pure form.

Below mentioned step-wise procedure was followed for rhodamine analysis (reference A Facile Spectrophotometric Method for the Determination of sodium hypochlorite using Rhodamine B).
- Preparation of standard curve for sodium hypochlorite and driving regression equation.
- Estimation of hypochlorite concentration from equation obtained from standard curve.

### Procedure for preparing standard curve.

1. Take 1mL of sample solution in 10mL calibrated flask.
2. Add 1mL of 2M HCl solution to the calibrated flask.
3. Add 1mL of 2% KI solution to the calibrated flask.
4. Mix the above solution until the appearance of yellow colour.
5. Add 2mL of 1:49 times diluted 0.05% rhodamine B to the calibrated 10mL flask.
6. Readily add 2mL of 1M sodium acetate to the calibrated flask.
7. Mix the reaction mixture for 2 minutes
8. Measure at 553nm against Milli-Q water as blank (shown in Table 4 and FIG. 3).

**Table 4: Standard curve after Rhodamine analysis**

| **Concentration (%)** | **Absorbance at 553 nm 49:1 (0.05 Rhodamine B)** |
|---|---|
| 0.02 | 0.298 |
| 0.06 | 0.312 |
| 0.10 | 0.327 |
| 0.14 | 0.346 |
| 0.18 | 0.385 |
| 0.22 | 0.411 |
| 0.26 | 0.438 |
| 0.30 | 0.467 |

### Procedure for estimating unknown sodium hypochlorite concentration:

• Take 1mL of unknown sample solution in 10mL calibrated flask.
• Add 1mL of 2M HCl solution to the calibrated flask.
• Add 1mL of 2% KI solution to the calibrated flask.
• Mix the above solution until the appearance of yellow colour.
• Add 2 mL of 1:49 times diluted 0.05% rhodamine B to the calibrated 10mL flask.
• Readily add 2mL of 1M sodium acetate to the calibrated flask.
• Mix the reaction mixture for 2 minutes.
• Measure at 553nm against Milli-Q water as blank.
• Linear equation [Y=0.6262X + 0.2728] derived from the standard graph (FIG. 3) used to calculate the unknown concentration of hypochlorite traces in sample.
• Value of Y subtitled with absorbance of unknown sample at 553nm and the equation was solved for X to obtain the concentration of unknown sample.

**Table 5: Hypochlorite estimation**

| **Samples of Hypochlorite regeneration flow through** | **Concentration (%)** | **Absorbance at 553 nm 49:1 0.05 Rhodamine B** |
|---|---|---|
| 2^{nd} CV | 0.04 | 0.299 |
| 3^{rd} CV | 0.01 | 0.278 |

It was observed that concentration of sodium hypochlorite present in the water wash flow through 3^{rd} CV was 0.01% which is a negligible concentration.

### Example 4

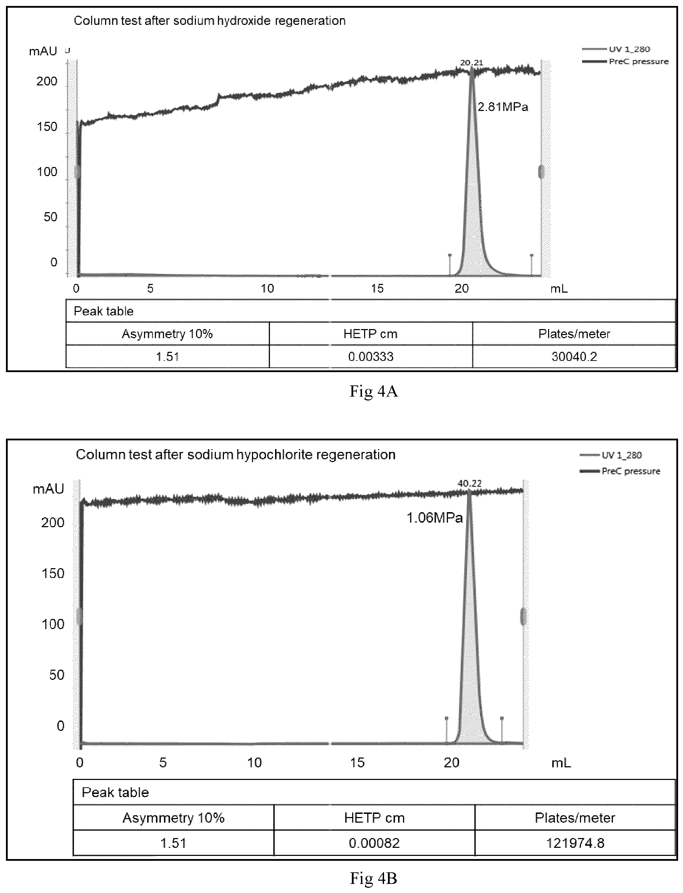

A column test was conducted to measure the reduction in pressure after regeneration with sodium hydroxide (FIG. 4A) and sodium hypochlorite (FIG. 4B). Table 6 shows results of the column test.

Regeneration of column with Sodium hydroxide (NaOH) was performed as follows:
1. Regenerate the column with 40% of 25mM sodium hydroxide and 60% of acetonitrile in up flow direction, till the pH reaches ≥11 and continue to run for one more CV thereafter. During the first CV, the linear flow rate is maintained at ≤100 cm/h and second CV onwards, the linear flow rate is maintained at ≤ 220 cm/h.
2. Neutralize the column with 30% of 1 M acetic acid and 70% of acetonitrile in up flow direction, for three CV at flow rate ≤ 220 cm/h.

Regeneration of column with Sodium hypochlorite (NaOCl) was performed as follows:
1. Regenerate the column with 40% of 1.2 % sodium hypochlorite and 60% of acetonitrile in up flow direction, till the pH reaches ≥11 and continue to run for two more CV thereafter. During the first CV, the linear flow rate is maintained at ≤100 cm/h and second CV onwards, the linear flow rate is maintained at ≤ 220 cm/h.
2. Neutralize the column with 30% of 1 M acetic acid and 70% of acetonitrile in up flow direction, for three CV at flow rate ≤ 220 cm/h.
3. Wash the column with 30% purified water and 70% of acetonitrile in up flow direction, for 5 CV at flow rate ≤ 220 cm/h.

**Table 6: Results of column test**

| **Sr. No.** | **Column test** | **Pressure during Column test** | **Asymmetry** | **Number of plates** |
|---|---|---|---|---|
| **UOM** | **NA** | **mPa** | **NA** | **plates/meter** |
| 1 | After Sodium hydroxide (NaOH) regeneration | 2.81 | 1.51 | 30040.2 |
| 2 | After Sodium hypochlorite (NaOCl) regeneration | 1.06 | 1.50 | 121974.8 |

As seen in FIG. 4A, FIG. 4B and table 6 it was observed that pressure of the column reduced and the number of plates increased significantly after Sodium hypochlorite regeneration.

### Example 5

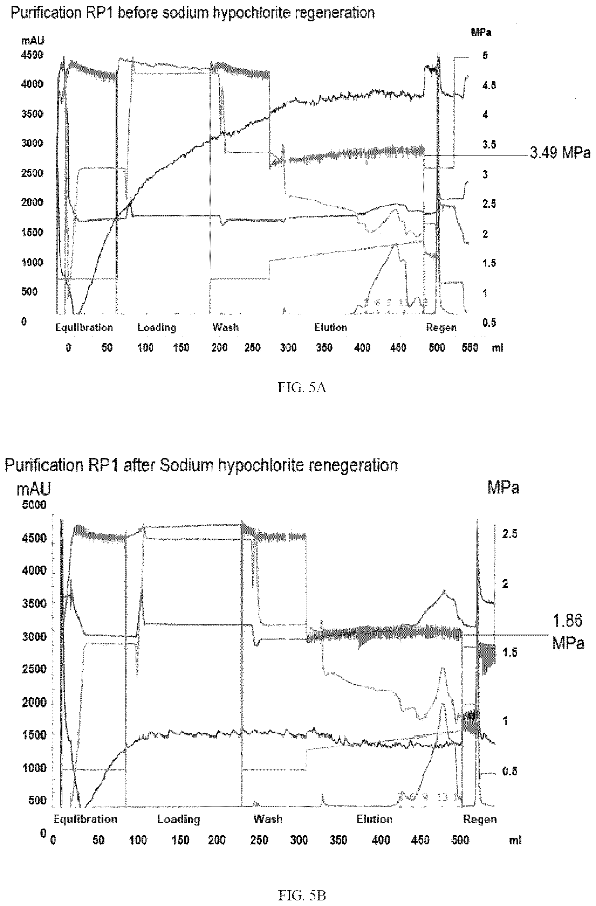

A column integrity test conducted to measure reduction in pressure before regeneration with sodium hypochlorite (FIG. 5A) and after regeneration with sodium hypochlorite (FIG. 5B). The regeneration was conducted as described in FIG. 1. This regeneration was conducted to evaluate the performance of preparative cycle before and after regeneration with sodium hypochlorite.

The details for column integrity test are as follows:
1. The column (Kromasil C8) was equilibrated with 70% of 100% acetonitrile and 30% purified water for 1CV at 180cm/hr.
2. After 1CV, injected 2% of CV volume of tracer: acetophenone (C₆H₅C(O)CH₃) to the column in the ratio of 1:99

**Table 7: before and after sodium hypochlorite regeneration**

| **Test** | **Elution Pressure** | **Elution Collection Gradient** |
|---|---|---|
| **UOM** | **mPa** | **%** |
| Cycle before Sodium hypochlorite regeneration | 3.49 | 18.22 |
| Cycle after Sodium hypochlorite regeneration | 1.76 | 18.34 |

The regeneration results are depicted in FIG. 5A, FIG. 5B and table 7. The elution pressure during RP-1 cycle reduced after Sodium hypochlorite regeneration and start B% (the point at which elution collection starts which indicate retention of protein) were compared between before and after Sodium hypochlorite regeneration. It was observed that elution pressure reduced almost 50% and the elution start B% (retention of protein) also increased after sodium hypochlorite regeneration.

### Example 6

Preparative chromatography resin (Kromasil C8) used for Glargine was obtained for regeneration experiment. RP-1 Cycle was performed before and after regeneration with Sodium hypochlorite to evaluate its performance without regenerating the resin further. After regenerating with sodium hypochlorite, 16 cycles were performed and there was no significant increase in elution pressure and the cycles met the forward processing criteria with comparable yield (detailed in table 8 and 9). FIG. 5A shows RP-1 Cycle before Sodium hypochlorite regeneration while FIG. 5B shows RP-1 Cycle after Sodium hypochlorite regeneration.

**Table 8: Glargine RP-1 cycle performance (abbreviations: RRT=Relative retention time; RTV=report the value; NLT=not less than; NMT=not more than; EP spec= elution pool specification; UOM=unit of measurement)**

| **Sample** | **Yield** | **% Purity** | **0.97 RRT** | **0.96 RRT** | **0.88 RRT** | **0.86 RRT** | **0.85 RRT** | **0.84 RRT** | **0.82/ 0.83 RRT** | **1.02 RRT** | **1.0 7 RRT** |
|---|---|---|---|---|---|---|---|---|---|---|---|
| **UOM** | **%** | **%** | **%** | **%** | **%** | **%** | **%** | **%** | **%** | **%** | **%** |
| **EP spec** | **RTV** | **NLT 95.0 %** | **NMT 0.33 *%*** | **RTV** | **RTV** | **RTV** | | **NMT 1.5 *%*** | **NMT 0.8** | **NMT 3.0%** | **NMT 0.5 %** |
| Cycle -1 before Sodium hypochlorite regeneration | 83.0 | 95.86 | 0.29 | 0.29 | 0.65 | 0.20 | 0.39 | 0.14 | 0.18 | 1.64 | 0.00 |

| Sodium Hypochlorite regeneration | | | | | | | | | | | |
|---|---|---|---|---|---|---|---|---|---|---|---|
| Cycle -1 after Sodium hypochlorite regeneration | 82.6 | 96.41 | 0.28 | 0.29 | 0.74 | 0.20 | 0.39 | 0.17 | 0.19 | 1.20 | 0.00 |
| Cycle-6 after Sodium hypochlorite regeneration | 79.2 | 95.23 | 0.29 | 0.21 | 0.76 | 0.19 | 0.33 | 0.12 | 0.28 | 2.33 | 0.00 |
| Cycle-10 after Sodium hypochlorite regeneration) | 79.3 | 96.18 | 0.28 | 0.22 | 0.71 | 0.18 | 0.33 | 0.11 | 0.22 | 1.66 | 0.00 |
| Cycle-15 after Sodium hypochlorite regeneration | 86.3 | 95.18 | 0.25 | 0.24 | 0.59 | 0.17 | 0.30 | 0.18 | 0.07 | 2.22 | 0.00 |

**Table 9: RP-1 Glargine preparative results for before and after sodium hypochlorite regeneration**

| **Sr. No.** | **Elution pressure** | **Start B%** |
|---|---|---|
| **UOM** | **MPa** | **%** |
| Before sodium hypochlorite regeneration | 3.49 | 18.22 |
| Cycle 1 | 1.76 | 18.34 |
| Cycle 6 | 1.78 | 18.36 |
| Cycle 10 | 1.86 | 18.36 |
| Cycle 15 | 1.85 | 19.16 |

### Example 7

An expired resin (Kromasil C8) from the manufacturing and trials was obtained and regenerated in three different methods as below:
A. Re-packing
B. NaOH regeneration
C. sodium hypochlorite regeneration

### A. Re-Packing procedure:

400g of used resin and 600g of IPA mixed well and packed at 65bar in LC-50 column.

### B. NaOH regeneration procedure:

1. The column was regenerated with mixture of 40% of 25mM sodium hydroxide and 60% of acetonitrile in up flow direction till the pH reaches ≥11 and continue to run for one more CV thereafter. During the first _{CV, the linear flow rate was maintained} at ≤100 cm/h and second CV onwards, the linear flow rate was maintained at ≤ 220 cm/h.
2. The column was neutralized with mixture of 30% of 1 M acetic acid and 70% of acetonitrile in up flow direction for three CV at flow rate ≤ 220 cm/h.

### C. Sodium hypochlorite regeneration:

1. The column was regenerated with mixture of 40% of (0.8-2.0) % sodium hypochlorite and 60% of acetonitrile in up flow direction till the pH reaches ≥11 and continued to run for two more CV thereafter. During the first _{CV, the linear flow rate was maintained} at ≤100 cm/h and second CV onwards the linear flow rate was maintained at ≤ 220 cm/h.
2. The column was neutralized with mixture of 30% of 1 M acetic acid and 70% of acetonitrile in up flow direction for three CV at flow rate ≤ 220 cm/h.
3. The column was washed with mixture of 30% purified water and 70% of acetonitrile in up flow direction, for 5 CV at flow rate ≤ 220 cm/h.

Column integrity test was performed to evaluate its performance before and after the regeneration (detailed in table 10).

RP-1 Cycle performed after packing and after NaOH regeneration had an average yield of 66.0% whereas cycles performed after regeneration with Sodium hypochlorite has a yield of 76.0% which shows that the performance of cycles improved after hypochlorite regeneration.

**Table 10: RP-1 Glargine analytical results for different regeneration**

| **Sample** | **Type of regene ration** | | | **% Purity** | **0.97 RRT** | **0.96 RRT** | **0.88 RRT** | **0.86 RRT** | **0.84R RT** | **0.82/ 0.83 RRT** | **1.02R RT** | **1.07 RR T** |
|---|---|---|---|---|---|---|---|---|---|---|---|---|
| **UOM** | | **%** | **g/L** | **%** | **%** | **%** | **%** | **%** | **%** | **%** | **%** | **%** |
| **EP spec** | | **Yield** | **DBC** | **NLT 95.0 %** | **NMT 0.33 *%*** | **RTV** | **RTV** | **RTV** | **NMT 1.5 %** | **NMT 0.8** | **NMT 3.0 %** | **NM T 0.5 %** |
| Cycle-1 EP (2-7) | After packin g | 63.54 | 10 | 97.219 | 0.23 | 0.06 | 0.69 | 0.14 | 0.08 | 0.202 | 0.96 | 0 |
| Cycle-2 EP (1-6) | | 67.22 | 10 | 96.845 | 0.21 | 0.045 | 0.63 | 0.13 | 0.10 | 0.261 | 1.344 | 0 |
| Cycle-4 EP (2-6) | | 64.69 | 10 | 97.23 | 0.20 | 0.04 | 0.62 | 0.11 | 0.20 | 0 | 1.31 | 0 |
| Cycle-5 EP (2-6) | After NaOH regene ration | 65.31 | 10 | 97.31 | 0.21 | 0.04 | 0.59 | 0.11 | 0.21 | 0 | 1.24 | 0 |
| Cycle-6 EP (2-6) | | 65.47 | 10 | 97.38 | 0.21 | 0.03 | 0.60 | 0.1 | 0.21 | 0 | 1.2 | 0 |
| Cycle-7 EP(2-6) | | 71.75 | 10 | 98.8 | 0.22 | 0.04 | 0.63 | 0.11 | 0.08 | 0 | 0 | 0 |
| Cycle-8 EP(1-6) | After sodiu m hypoc hlorite regene ration | 75.68 | 10 | 97.07 | 0.27 | 0.24 | 0.61 | 0.14 | 0.15 | 0 | 0.85 | 0 |
| Cycle-9 EP(1-6) | | 76.76 | 10 | 97.04 | 0.26 | 0.31 | 0.65 | 0.17 | 0.19 | 0 | 0.59 | 0 |
| Cycle-10 EP(1-6) | | 76.40 | 10 | 96.79 | 0.3 | 0.35 | 0.67 | 0.18 | 0.24 | 0 | 0.58 | 0 |

### Example 8: Impact of sodium hypochlorite on resin physiochemical properties Resin samples were sent to Osaka Soda Co. Ltd for the analysis and verification. Fouled resin (A) (Kromasil C8) was regenerated and held under pressure (65bar) with sodium hypochlorite solution at different time points (designated here onwards as resin B (at 0 hours), resin C (at 12 hours), resin D (at 24 hours) followed by neutralization and wash after the end of each hold time.

The following 7 tests were conducted and compared against negative control resin E (fresh resin).
A. Physical appearance of the resin- Visual observation
B. Particle size (µm) - To determine resin structural integrity
C. Pore size (Å)- To determine extent of fouling
D. Surface area (m²/g)- To determine extent of fouling
E. Pore volume (mL/g) - To determine extent of fouling
F. Elemental analysis- To obtain approximate ligand density and nature of fouling
G. Column tests
   a. Aromatic and basic standards - To determine ligand effectiveness for separation
   b. HETP and Asymmetry- To determine packing efficiency and bed integrity

### A. Physical appearance of the resin

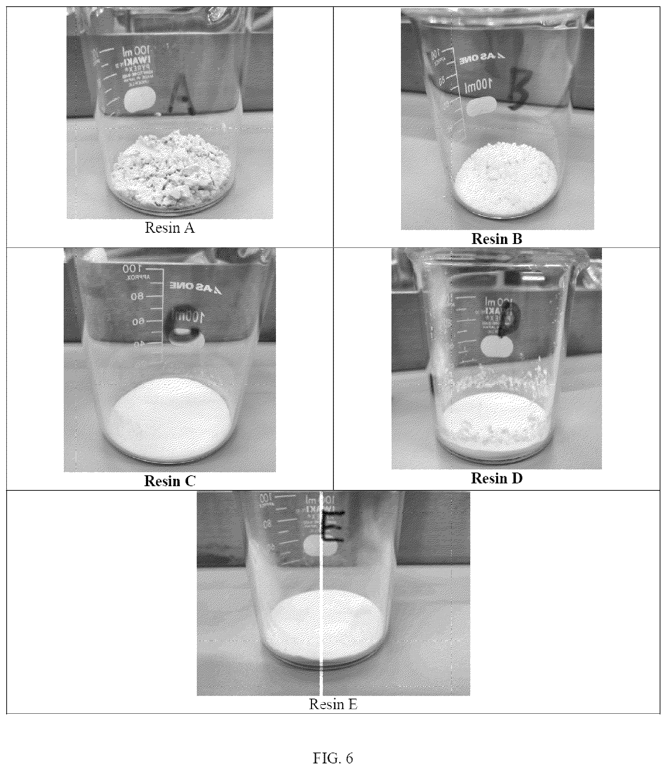

The physical appearance of the resin was checked and observed colours of the resins as follows (as seen in FIG. 6):
Resin A- pale brown coloured
Resin B- white coloured
Resin C- white coloured
Resin D- white coloured
Resin E- white coloured

From above visual observations, we concluded that after the sodium hypochlorite regeneration, the resin is white in colour which is comparable to that of negative control. The sodium hypochlorite regeneration of present invention is effective in removing the impurities (colour) from the resin.

### B. Particle size

Particle size was analyzed by Sedimentation method [Average D50 (µm), Distribution D40/D90] using Centrifugal Automatic Particle Analyzer CAPA-300 (Horiba, Ltd.) as Sedimentation-type particle size analyzer.

Particle size of silica gel as a raw material was measured by it as follows.
1. Sample of silica gel was dispersed in purified water.
2. The rate of Gravitation Sedimentation of particles was measured by change of light transmittance and particle size of silica gel was calculated by the rate of Gravitation Sedimentation.
3. Particle sizes at 50%, 90% and 40% accumulative weight were plotted by Particle size- Accumulative weight curve.
4. D50 (50% accumulative weight) means average Particle size.
5. Coefficient of uniformity is shown by D40/D90.

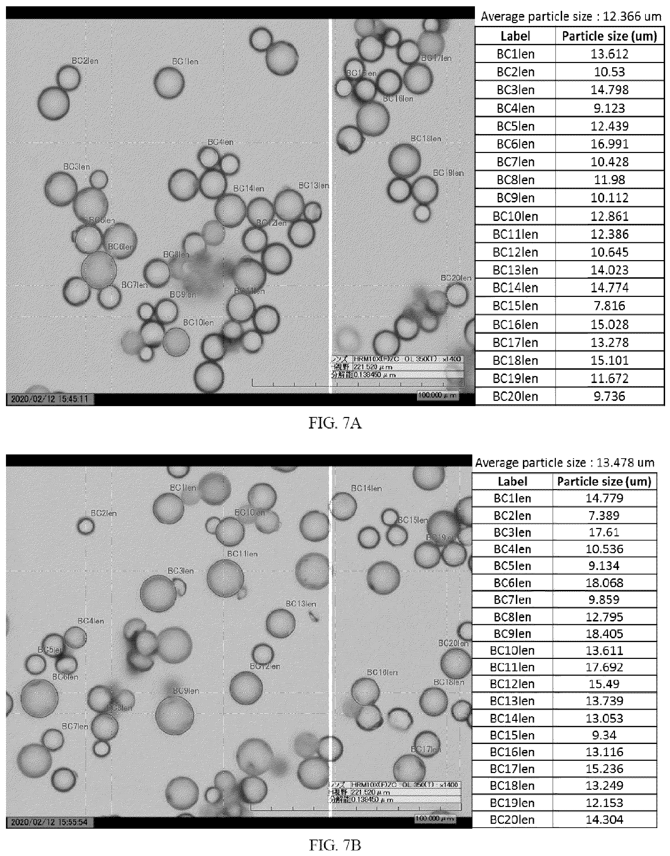

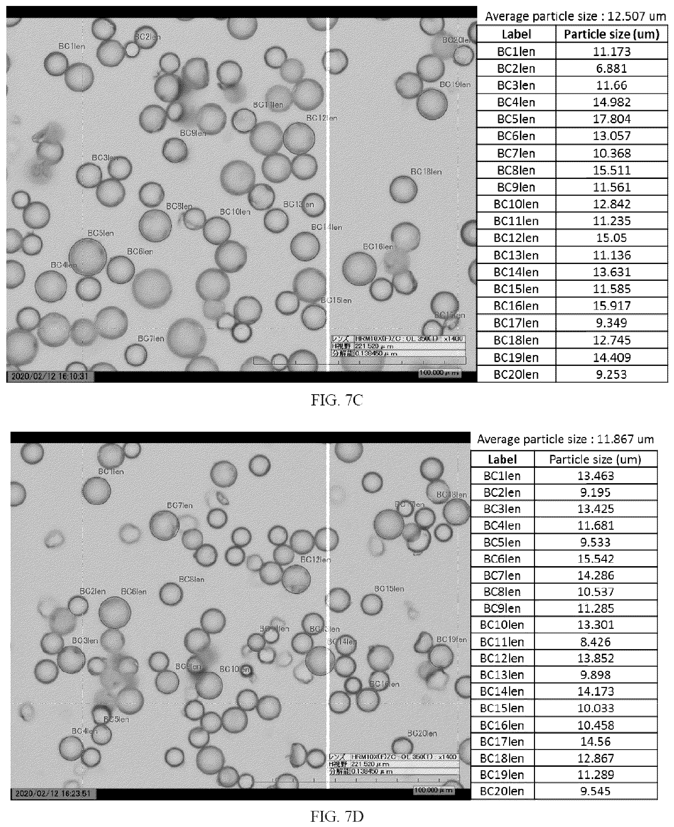

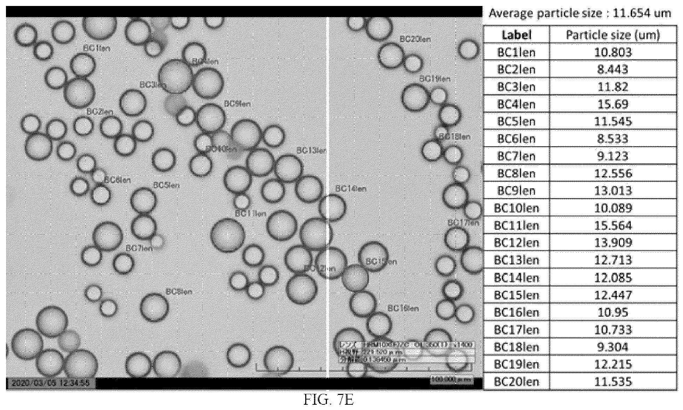

The particle size of the resins A, B, C. D and E were observed as depicted in FIG. 7A, FIG. 7B, FIG. 7C, FIG. 7D and FIG. 7E respectively. Table 11 elaborate the average particle size of each resin.

**Table 11: average particle size of resin**

| **Resin Sample** | **Average Particle size (µm)** |
|---|---|
| A | 12.366 |
| B | 13.478 |
| C | 12.507 |
| D | 11.867 |
| E | 11.654 |

It was observed that the particle size was not showing any differences to indicate loss of resin structural integrity. However, during measurement, very few resin particles were observed to be damaged in resin A, B, C and D indicating the damage is not attributed to regeneration treatment. This damage could be attributed to regular usage of the resin. There were no damaged particles observed in negative control resin.

### C. Pore size

Pore size, Surface area and Pore volume of silica gel as a raw material were measured by B.E.T. method with AUTOSORB-1-Kr (Sysmex Corp.) as follows.
1. Put 0.1g of silica gel into the cell and it was degassed at 200°C for 60min.
2. The sample was cooled and the weight was measured.
3. Set the sample cell.
4. From the volume of N2 gas adsorbed in silica gel, Pore size, surface area and pore volume were calculated.

The following table 12 capture the pore sizes observed

**Table 12: pore size of resin**

| **Resin Sample** | **Pore size (Å)** |
|---|---|
| A | 99 |
| B | 101 |
| C | 101 |
| D | 100 |
| E | 101 |

The slight pore size increase after regeneration treatment may indicate the clearing of pores which may have been fouled by impurities. Post regeneration treatment, the pore sizes were comparable to that of the negative control resin E. No damage was attributed to regeneration treatment.

### D. Surface area

The following table captures the surface area observed as listed in table 13

**Table 13: surface area of resin**

| **Resin Sample** | **Surface area (m²/g)** |
|---|---|
| A | 224 |
| B | 233 |
| C | 231 |
| D | 233 |
| E | 224 |

The surface area increased after the regeneration treatment. It indicates that the surface area might have been reduced due to surface bound impurities. These surface bound impurities must have been cleared after the regeneration treatment. On a physical level, the pale brown coloration (as seen in FIG. 6 for resin A) on the resin indicates the surface bound impurities which turns white after regeneration treatment indicating the surface was cleared of impurities.

### E. Pore volume

The following table 14 captures the surface area observed

**Table 14: surface area of resin**

| **Resin Sample** | **Pore volume (mL/g)** |
|---|---|
| A | 0.55 |
| B | 0.59 |
| C | 0.58 |
| D | 0.58 |
| E | 0.57 |

The pore volumes were observed to increase slightly after the regeneration treatment. This may indicate any pores which might have been blocked by the impurities has been cleared post the regeneration treatment.

### F. Elemental analysis

Carbon, Hydrogen and Nitrogen content of the modified silica gel was measured by CHN coder (Yanaco Co.). Modified part of silica sample was decomposed to H₂O, CO₂ and N₂ by perfect combustion and their concentrations were measured as follows:
1. Make a calibration curve from three times measurement of carbon signals for Antipyrine.
2. Check the accuracy of the calibration curve by the carbon content of p-Nitroaniline as a standard.
3. 4000 - 6000 ug of the modified silica gel sample measured and carbon content calculated from the signal and the calibration curve.

The elemental analysis as shown in table 15 shows that the regeneration treatment was capable of bringing down the %C, %H and %N to basal levels. The basal level of %C and %H is contributed by the ligands of the resin. The decrease in %C, %H and %N by 0.8%, 0.1% and 0.26% respectively which may be attributed to impurities of biological nature which was removed as a result of regeneration treatment.

**Table 15: concentration of Carbon, Hydrogen and Nitrogen**

| **Resin Sample** | **C (%)** | **H (%)** | **N (%)** |
|---|---|---|---|
| A | 12.4 | 2.4 | 0.31 |
| B | 11.6 | 2.3 | 0.05 |
| C | 11.6 | 2.3 | 0.07 |
| D | 11.6 | 2.3 | 0.05 |
| E | 11.9 | 2.3 | -0.02 |

### G. Column tests with aromatic and basic standards

The Pyridine-Phenol test is for detecting Silanol activity. In case of silica extended usage (repeated packing) coupled with repeated NaOH wash, small parts of the silica particles break off. The silica surface goes through Silanol deactivation by the bonding of the (C8) ligands and the end-capping. Where pieces break off un-bonded/un-treated silica gets exposed, Silanol groups get exposed. As the numbers of cycles of resin increases, the peak for Pyridine starts getting lesser retention time indicative of loss of ligands which is undesirable and the peak for Phenol shows increase in retention time due to the increased Silanol Activity which is also undesirable.

Table 16 shows the results of Pyridine-Phenol test, from which, it was observed that upon regeneration treatment the values are fairly consistent indicating no loss of ligands or increase in silanol activity. Hence the column performance was not impacted by the regeneration treatment carried out.

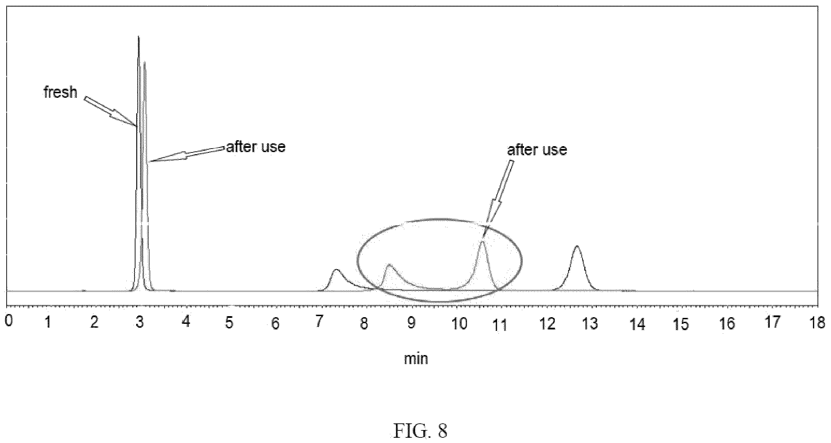

As seen in FIG. 8, the peak obtained for fresh resin and resin regenerated after use are similar, thus, we concluded the column performance was not impacted by the regeneration treatment carried out.

**Table 16: results of column test [*Understanding the Pyridine-Phenol Test α(k'_{Pyridine}/k'_{Phenol})]**

| **Sample** | **Aromatic Standard** | | | | **Basic Standard** | | |
|---|---|---|---|---|---|---|---|
| | **Napthalene Retention time** | **k'_{Napthalene}** | **HETP** | **Pressure** | **Asymmetry of Pyridine peak** | **Asymmetry of Phenol peak** | **α(k'_{Pyridine}/k'_{P henol})*** |
| | **(min)** | | | **(MPa)** | | | |
| A | 10.03 | 4.87 | 0.035 | 1.2 | 1.47 | 1.15 | 0.55 |
| B | 9.97 | 4.86 | 0.032 | 1.4 | 1.99 | 1.12 | 0.56 |
| C | 10.07 | 4.87 | 0.031 | 1.4 | 1.52 | 1.07 | 0.56 |
| D | 9.94 | 4.84 | 0.031 | 1.4 | 2.04 | 1.06 | 0.56 |
| E | 10.78 | 5.52 | 0.027 | 1.6 | 2.13 | 1.04 | 0.54 |

### Conclusion

The process of regeneration of chromatography resin of present invention was able to regenerate resin therefor proved useful to make the maximum use of resin, reduce the loss of resin and unpack repack frequency. It also increased the resin life time, which proves to be a commercial advantage at manufacturing. Similar process can be used for chromatography column used for other insulin analogues such as Lispro, Aspart and recombinant human insulin.

## Claims

1. A process for regenerating a reverse-phase or a silica based chromatography material, the process comprising:
a. contacting the chromatography material with a regeneration solution comprising sodium hypochlorite and acetonitrile; wherein the regeneration solution has a pH of 11 or more;
b. neutralizing the regenerated chromatography material with a neutralization solution comprising at least one organic acid and at least one organic solvent; and
c. washing the neutralized chromatography material with a wash solution comprising purified water and an organic solvent.

2. The process according to claim 1, wherein contacting the chromatography material with the regeneration solution is carried out inside a chromatography column.

3. The process according to any one of the preceding claims, wherein the chromatography material is contacted with the regeneration solution for a period in the range from 10 to 60 minutes.

4. The process according claim 3, wherein the chromatography material is contacted with the regeneration solution for a period of 30 minutes.

5. The process according to any one of the preceding claims, wherein contacting the chromatography material with the regeneration solution comprises allowing one or more material volumes of the regeneration solution to pass through or over the chromatography material, and/or
wherein contacting the chromatography material with said regeneration solution is performed at a temperature in the range of 20° C to 25° C, and/or
wherein said chromatographic material is contacted with said regeneration solution until the pressure on the chromatographic column at a flow rate of 220 cm/hr decreases by at least 10%.

6. The process according to any one of the preceding claims, wherein the chromatography material is a resin, and/or
wherein the chromatography material is a high pressure liquid chromatography (HPLC) material.

7. The process according to any one of the preceding claims, wherein the chromatography material is a high pressure liquid chromatography (HPLC) material comprising substituted silica selected from C-4 silica, C-8 silica, C-12 silica and C-18 silica.

8. The process according to any one of the preceding claims, wherein neutralizing the regenerated chromatography material with a neutralization solution comprises allowing one or more material volumes of the neutralization solution to pass over and/or through the chromatography material, and/or
wherein the neutralization solution, with which the chromatography material is contacted, has a pH of 5 or less.

9. The process according to any one of the preceding claims, wherein the organic comprised in the wash solution is acetonitrile.

10. The process according to any one of the preceding claims, wherein the organic acid in the neutralization solution has a pKa value in the range from 2.0 to 5.0, and/or
wherein the organic acid in the neutralization solution is acetic acid and/or wherein the organic solvent comprised in the neutralization solution is acetonitrile.

11. The process according to any one of the preceding claims, wherein regenerating the chromatographic resin is carried out on a chromatography material after it has been used for the purification of a therapeutic polypeptide selected from the group consisting of human insulin, analogues and derivatives.

12. The use of a regeneration solution comprising sodium hypochlorite and acetonitrile, having a pH of 11 or more, for cleaning a reverse-phase or a silica based chromatography material.

## Patentansprüche

1. Verfahren zum Regenerieren eines Umkehrphasenchromatographiematerials oder eines Chromatographiematerials auf Siliciumdioxidbasis, wobei das Verfahren aufweist:
a. das Chromatographiematerial mit einer Regenerierungslösung in Kontakt bringen, die Natriumhypochlorit und Acetonitril aufweist, wobei die Regenerierungslösung einen pH-Wert von 11 oder mehr aufweist,
b. das regenerierte Chromatographiematerial mit einer Neutralisationslösung neutralisieren, die mindestens eine organische Säure und mindestens ein organisches Lösungsmittel aufweist, und
c. das neutralisierte Chromatographiematerial mit einer Waschlösung waschen, die gereinigtes Wasser und ein organisches Lösungsmittel aufweist.

2. Verfahren nach Anspruch 1, wobei das Chromatographiematerial mit der Regenerierungslösung in Kontakt zu bringen innerhalb einer Chromatographiesäule durchgeführt wird.

3. Verfahren nach einem der vorangehenden Ansprüche, wobei das Chromatographiematerial für einen Zeitraum im Bereich von 10 bis 60 Minuten mit der Regenerierungslösung in Kontakt gebracht wird.

4. Verfahren nach Anspruch 3, wobei das Chromatographiematerial für einen Zeitraum von 30 Minuten mit der Regenerierungslösung in Kontakt gebracht wird.

5. Verfahren nach einem der vorangehenden Ansprüche, wobei das Chromatographiematerial mit einer Regenerierungslösung in Kontakt zu bringen umfasst, es zuzulassen, dass ein oder mehrere Materialvolumina der Regenerierungslösung durch das Chromatographiematerial oder darüber hinweg fliessen, und/oder
wobei das Chromatographiematerial mit der Regenerierungslösung in Kontakt zu bringen bei einer Temperatur im Bereich von 20 °C bis 25 °C durchgeführt wird und/oder
wobei das besagte Chromatographiematerial mit der Regenerierungslösung in Kontakt gebracht wird, bis der Druck auf die Chromatographiesäule bei einer Durchflussrate von 220 cm/h um wenigstens 10 % abnimmt.

6. Verfahren nach einem der vorangehenden Ansprüche, wobei das Chromatographiematerial ein Harz ist und/oder
wobei das Chromatographiematerial ein Hochdruckflüssigkeitschromatographie-Material (HPLC-Material) ist.

7. Verfahren nach einem der vorangehenden Ansprüche, wobei das Chromatographiematerial ein Hochdruckflüssigkeitschromatographie-Material (HPLC-Material) ist, das substituiertes Siliciumdioxid aufweist, das aus C-4-Siliciumdioxid, C-8-Siliciumdioxid, C-12-Siliciumdioxid und C-18-Siliciumdioxid ausgewählt ist.

8. Verfahren nach einem der vorangehenden Ansprüche, wobei das regenerierte Chromatographiematerial mit einer Neutralisationslösung zu neutralisieren umfasst, es zuzulassen, dass ein oder mehrere Materialvolumina der Neutralisationslösung über das Chromatographiematerial hinweg und/oder durch es hindurch fliessen, und/oder
wobei die Neutralisationslösung, mit der das Chromatographiematerial in Kontakt gebracht wird, einen pH-Wert von 5 oder weniger aufweist.

9. Verfahren nach einem der vorangehenden Ansprüche, wobei die in der Waschlösung enthaltene organische Acetonitril ist.

10. Verfahren nach einem der vorangehenden Ansprüche, wobei die organische Säure in der Neutralisationslösung einen pKa-Wert im Bereich von 2,0 bis 5,0 aufweist und/oder
wobei die organische Säure in der Neutralisationslösung Essigsäure ist und/oder wobei das in der Neutralisationslösung enthaltene organische Lösungsmittel Acetonitril ist.

11. Verfahren nach einem der vorangehenden Ansprüche, wobei das Regenerieren des chromatographischen Harzes an einem Chromatographiematerial durchgeführt wird, nachdem es zur Reinigung eines therapeutischen Polypeptids verwendet wurde, das aus der Gruppe ausgewählt ist, die aus menschlichem Insulin, Analoga und Derivaten besteht.

12. Verwendung einer Regenerierungslösung, die Natriumhypochlorit und Acetonitril aufweist und einen pH-Wert von 11 oder mehr hat, zum Reinigen eines Umkehrphasenchromatographiematerials oder eines Chromatographiematerials auf Siliciumdioxidbasis.

## Revendications

1. Processus de régénération d'un matériau chromatographique à phase inverse ou à base de silice, le processus comprenant :
a. la mise en contact du matériau chromatographique avec une solution de régénération comprenant de l'hypochlorite de sodium et de l'acétonitrile ; dans lequel la solution de régénération a un pH de 11 ou plus ;
b. la neutralisation du matériau chromatographique régénéré avec une solution de neutralisation comprenant au moins un acide organique et au moins un solvant organique ; et
c. le lavage du matériau chromatographique neutralisé avec une solution de lavage comprenant de l'eau purifiée et un solvant organique.

2. Processus selon la revendication 1, dans lequel la mise en contact du matériau chromatographique avec la solution de régénération est effectuée à l'intérieur d'une colonne chromatographique.

3. Processus selon l'une quelconque des revendications précédentes, dans lequel le matériau chromatographique est mis en contact avec la solution de régénération pendant une période comprise dans la plage de 10 à 60 minutes.

4. Processus selon la revendication 3, dans lequel le matériau chromatographique est mis en contact avec la solution de régénération pendant une période de 30 minutes.

5. Processus selon l'une quelconque des revendications précédentes, dans lequel la mise en contact du matériau chromatographique avec la solution de régénération comprend le fait de permettre à un ou plusieurs volumes de matériau de la solution de régénération de passer à travers ou sur le matériau chromatographique, et/ou
dans lequel la mise en contact du matériau chromatographique avec ladite solution de régénération est effectuée à une température dans la plage de 20 °C à 25 °C, et/ou
dans lequel ledit matériau chromatographique est mis en contact avec ladite solution de régénération jusqu'à ce que la pression sur la colonne chromatographique à un débit de 220 cm/h diminue d'au moins 10 %.

6. Processus selon l'une quelconque des revendications précédentes, dans lequel le matériau chromatographique est une résine, et/ou
dans lequel le matériau chromatographique est un matériau de chromatographie liquide haute performance (HPLC) .

7. Processus selon l'une quelconque des revendications précédentes, dans lequel le matériau chromatographique est un matériau de chromatographie liquide haute performance (HPLC) comprenant de la silice substituée sélectionnée parmi la silice C-4, la silice C-8, la silice C-12 et la silice C-18.

8. Processus selon l'une quelconque des revendications précédentes, dans lequel la neutralisation du matériau chromatographique régénéré avec une solution de neutralisation comprend le fait de permettre à un ou plusieurs volumes de matériau de la solution de neutralisation de passer sur et/ou à travers le matériau chromatographique, et/ou
dans lequel la solution de neutralisation, avec laquelle le matériau chromatographique est mis en contact, a un pH de 5 ou moins.

9. Processus selon l'une quelconque des revendications précédentes, dans lequel le composé organique compris dans la solution de lavage est de l'acétonitrile.

10. Processus selon l'une quelconque des revendications précédentes, dans lequel l'acide organique dans la solution de neutralisation a une valeur de pKa dans la plage de 2,0 à 5,0, et/ou
dans lequel l'acide organique dans la solution de neutralisation est de l'acide acétique et/ou dans lequel le solvant organique compris dans la solution de neutralisation est de l'acétonitrile.

11. Processus selon l'une quelconque des revendications précédentes, dans lequel la régénération de la résine chromatographique est effectuée sur un matériau chromatographique après qu'il a été utilisé pour la purification d'un polypeptide thérapeutique sélectionné dans le groupe constitué de l'insuline humaine, d'analogues et de dérivés.

12. Utilisation d'une solution de régénération comprenant de l'hypochlorite de sodium et de l'acétonitrile, ayant un pH de 11 ou plus, pour nettoyer un matériau chromatographique à phase inverse ou à base de silice.
